# FASCICULE DE BREVET EUROPEEN

(11) **EP 0 912 961 B1**
(45) Date de publication et mention de la délivrance du brevet: **26.09.2001**
(21) Numéro de dépôt: 97932888.7
(22) Date de dépôt: 10.07.1997
(51) Int. Cl.: G06K 17/00

(54) **SYSTEME ET PROCEDE DE TRANSMISSION DE MESSAGES, NOTAMMENT POUR LA MISE A JOUR DE DONNEES ENREGISTREES DANS DES ETIQUETTES ELECTRONIQUES**
NACHRICHTENÜBERTRAGUNGSSYSTEM UND -VERFAHREN, INSBESONDERE FÜR DIE AKTUALISIERUNG DER DATEN IN ELEKTRONISCHEN PREISSCHILDERN
SYSTEM AND METHOD FOR TRANSMITTING MESSAGES, IN PARTICULAR FOR UPDATING DATA RECORDED IN ELECTRONIC LABELS

(30) Priorité: 16.07.1996 FR 9608872
(43) Date de publication de la demande: 06.05.1999
(73) Titulaire: Rivollet, Robert, 94430 Chennevières sur Marne (FR)
(72) Inventeur: RIVOLLET, Robert, F-94430 Chennevières sur Marne (FR); HEILLAUT, Christian, F-41250 Mont près Chambord (FR)
(74) Mandataire: Keib, Gérard
(86) Numéro de dépôt international: FR9701265
(87) Numéro de publication internationale: WO9802846

(56) Documents cités:
- EP-A- 0 456 462
- DE-A- 3 227 170
- US-A- 5 475 285

## Description

L'invention concerne un système de transmission de messages, notamment pour la programmation et/ou la mise à jour de dispositifs électroniques comportant des organes de mémoire et/ou d'affichage.

L'invention concerne également un procédé de transmission de messages.

Elle s'applique préférentiellement, mais non exclusivement, à la mise à jour des données affichées par des étiquettes électroniques, par exemples des étiquettes affichant diverses informations sur un produit : prix, prix au kg, etc. De telles étiquettes sont disposées dans les gondoles de présentation des produits précités dans certains lieux de ventes (supermarchés ou similaires).

Outre cette application préférentielle à la mercatique, on pourra faire appel à un système selon l'invention dans de nombreux autres domaines : mise à jour d'afficheurs d'horaires, etc.

Pour fixer les idées, sauf mention contraire, on se placera ci-après dans le cadre de l'application préférée de l'invention, c'est-à-dire la mise à jour de données affichées par des étiquettes électroniques.

En soi, de telles étiquettes sont bien connues. Elles comportent généralement une mémoire, des moyens de traitement de l'information, ou pour le moins de programmation et de saisie de données pour leur enregistrement dans la mémoire, et un afficheur, le plus souvent à cristaux liquides pour économiser l'énergie nécessaire au bon fonctionnement du dispositif. En effet, il est intéressant de disposer d'un appareil transportable, d'une part, et le grand nombre d'étiquettes habituellement utilisées dans un lieu de vente, d'autre part, interdisent en pratique une alimentation par branchement sur le secteur.

On peut penser programmer et/ou mettre à jour ces étiquettes par saisie manuelle des données (par exemple à l'aide d'un clavier). Ce procédé est fastidieux et générateur d'erreurs.

Aussi, il a été proposé d'établir des liaisons informatiques entre les étiquettes et un site central de traitement d'information, par exemple un ordinateur de gestion. Pour les raisons indiquées plus haut, ces liaisons ne peuvent être fixes.

Une première catégorie de système selon l'art connu met en oeuvre des liaisons infrarouges. Ce type de liaison, tout à fait comparables à celles utilisées dans les dispositifs de télécommande domestiques (téléviseurs, etc.) présente l'avantage d'une très grande bande passante et on peut donc véhiculer des signaux à très haute vitesse. Cependant, de telles liaisons présentent un inconvénient majeur. En effet, ces ondes sont très directives et il est nécessaire d'orienter très précisément les récepteurs dont sont munies les étiquettes vers les émetteurs d'ondes infrarouges, ce qui est antinomique avec la souplesse recherchée. Les étiquettes doivent pouvoir être disposées en de nombreux endroits d'une gondole, non seulement le long de celle-ci, mais aussi à différents niveaux (étagères), ce qui risque de les placer dans des "zones d'ombre". Ce mode de liaison n'est en réalité utilisable que pour des installations fixes ou semi-fixes.

On a également proposé, dans l'art connu, d'utiliser des ondes radio. Cependant, si ce type de liaisons répond, *a priori,* aux besoins exprimés, il engendre une pollution électromagnétique qui peut s'avérer inacceptable. En outre, les normes en ce domaine se sont durcies : il existe notamment une réglementation UE, applicable depuis janvier 1996.

EP-A-0 456 462 expose un système de transmission de messages selon le préambule de la revendication 1. Dans le système de EP-A-0 456 462, la lumière envoyée de l'émetteur aux récepteurs du système est modulée en durée d'impulsion ou en phase pour pouvoir modifier l'intensité de l'énergie lumineuse émise.

L'invention, tout en conservant les avantages des systèmes de l'art connu les plus performants, notamment la possibilité de mise à jour fiable, en un court intervalle de temps, d'un grand nombre d'étiquettes électroniques, ce sans apporter de contraintes quant à leur disposition, vise à en pallier les inconvénients.

Pour ce faire, le système selon l'invention fait appel à la modulation de la lumière visible, notamment, dans un mode de réalisation préféré, la modulation de la lumière produit par des tubes fluorescents.

Il a été constaté que, lorsque l'on augmente la fréquence d'alimentation d'un tube fluorescent, l'intensité lumineuse diminue. Le tube se comporte comme une self. L'invention tire partie de ce phénomène. Ce phénomène est connu de US-A-5 475 285.

Or, si on se réfère par exemple à l'application préférée de l'invention, les surfaces de ventes, dans leur quasi-majorité, sont éclairées en permanence par des tubes du type précité. On peut donc aussi utiliser ces tubes aux fins de mise à jour des étiquettes. Il en résultera de faibles variations de la luminosité ambiante et des clignotements qui peuvent être rendus supportables par des dispositions particulières qui seront précisées ci-après.

Le système selon l'invention comprend essentiellement quatre parties : un codeur numérique, un modulateur de lumière commandé par le codeur et servant d'émetteur, un récepteur sensible à la modulation de la lumière émise par les organes d'éclairage ambiant commandés par le modulateur et un décodeur, associé à des circuits de traitement de signaux. Ces deux derniers organes constituent le coeur de l'étiquette électronique. Celle-ci comprend en outre un organe d'affichage commandé par les circuits de traitement de signaux, ces derniers comprenant classiquement une ou plusieurs mémoires (mémoire vive, mémoire fixe, registres). De façon préférentielle, on utilisera un microcontrôleur, un microprocesseur, voire un circuit dédié, par exemple du type dit "ASIC" ("Application Specific Integrated Circuit" ou "Circuit Intégré pour une Application Spécifique") si le nombre d'étiquettes fabriquées le justifie.

Selon un premier mode de réalisation de l'invention, on réalise une modulation de la fréquence. Comme le codage est de type binaire, il suffit de disposer de deux états distincts, en ce qui concerne la modulation, donc de deux fréquences. Selon ce mode de réalisation, on alimente les tubes fluorescents, pendant les périodes de mise à jour des étiquettes, par une première fréquence pour représenter un "1" logique et une seconde fréquence pour représenter un "0" logique. Comme il a été précédemment indiqué, l'intensité lumineuse émise décroît avec la fréquence. L'intensité lumineuse reçue par les étiquettes électroniques va donc fluctuer au rythme des informations transmises par le codeur.

L'invention a donc pour objet un système de transmission de messages comprenant un émetteur et au moins un récepteur, l'émetteur comprenant un générateur de données numériques représentatives d'un message, des moyens de codage de ces données en un code numérique série déterminé et des moyens de modulation selon un mode déterminé d'un rayonnement électromagnétique, chaque récepteur comprenant au moins des moyens sensibles audit rayonnement électromagnétique modulé le convertissant en signaux électriques et des moyens de décodage permettant de reconstituer ledit message à partir des signaux convertis, les moyens de modulation commandant des organes d'éclairage en lumière visible, de manière à modifier l'intensité de l'énergie lumineuse émise selon deux états distincts pendant les périodes de transmission desdits messages, et lesdits moyens sensibles au rayonnement électromagnétique détectant ces deux états de façon à délivrer des signaux électriques présentant deux états distincts,
caractérisé en ce que lesdits moyens de codage génèrent des premiers et seconds signaux numériques codés ayant une première et une seconde fréquence représentant des premier et second états logiques desdites données numériques, en ce que les moyens de modulation modulent l'intensité lumineuse émise selon l'une ou l'autre de ces fréquences en fonction de l'état logique dudit code numérique, et en ce que lesdits moyens de décodage génèrent un signal numérique à un premier état logique lorsque lesdits moyens sensibles au rayonnement électromagnétique détectent un rayonnement modulé selon la première fréquence, et génèrent un signal numérique à un second état logique lorsque ceux-ci détectent un rayonnement modulé selon la seconde fréquence.

L'invention a encore pour objet un procédé de transmission de messages entre un émetteur et au moins un récepteur, comprenant une phase d'émission comportant: i) une étape de génération de données numériques représentatives d'un message, ii) une étape de codage de ces données en un code numérique série déterminé et iii) une étape de modulation selon un mode déterminé d'un rayonnement électromagnétique; une phase de réception comportant: a) une étape de détection du rayonnement électromagnétique modulé, b) une étape de conversion du rayonnement électromagnétique détecté en signaux électriques et c) une étape de décodage permettant de reconstituer ledit message à partir des signaux convertis, ladite étape de modulation iii) consistant à moduler de la lumière visible émise en alimentant des organes d'éclairage émettant cette lumière visible à l'aide de signaux modulés selon ledit mode, de manière à modifier l'intensité de la lumière émise selon deux états distincts pendant les périodes de transmission desdits messages, les étapes de détection a) et de conversion b) consistant à générer des signaux électriques présentant deux états de façon à délivrer des signaux électriques numériques présentant deux états distincts en synchronisme avec ladite modulation de la lumière visible, et l'étape de décodage c) consistant à reconstituer à partir de ces signaux numériques à deux états desdites données numériques représentatives du message, caractérisé en ce que ladite étape de modulation iii) consiste à générer une tension d'alimentation desdits organes d'éclairage en lumière visible ayant une première ou une seconde fréquence déterminée en fonction de l'état logique desdites données numériques rerésentatives du message, de manière à faire varier l'intensité lumineuse émise entre deux états déterminés.

L'invention a enfin pour objet l'application de ce système à la mise à jour de données affichées par des étiquettes électroniques disposées sur les gondoles de présentation d'articles dans une surface de vente.

L'invention sera mieux comprise et d'autres caractéristiques et avantages apparaîtront à la lecture de la description qui suit en référence aux figures annexées, et parmi lesquelles :
- La figure 1 illustre schématiquement un système selon l'invention appliqué à la mise à jour de données affichées par des étiquettes électroniques disposées sur les gondoles de présentation d'articles dans une surface de vente ;
- La figure 2 est un bloc diagramme illustrant schématiquement un codeur selon une première variante de réalisation de l'invention ;
- La figure 3 est un chronogramme illustrant schématiquement les signaux de commande de modulation, en fonction d'états logiques du message à transmettre ;
- Les figures 4a et 4b illustrent schématiquement un étage pilote de modulateur et le modulateur conforme à la première variante de réalisation ;
- La figure 5 est un chronogramme illustrant schématiquement les signaux d'alimentation en tension et en courant des organes d'éclairage pour le premier mode de réalisation ;
- Les figures 6 et 7 illustrent la structure de deux types de messages à transmettre ;
- La figure 8 est un bloc diagramme illustrant schématiquement une étiquette électronique ;
- La figure 9 est un chronogramme illustrant schématiquement les signaux décodés dans l'étiquette électronique dans le premier mode de réalisation ;
- La figure 14 illustre un détail de réalisation d'une étiquette électronique selon une variante supplémentaire ;
- La figure 15 illustre un exemple concret d'application du système selon l'invention à la mise à jour des étiquettes électroniques dans une surface de vente.

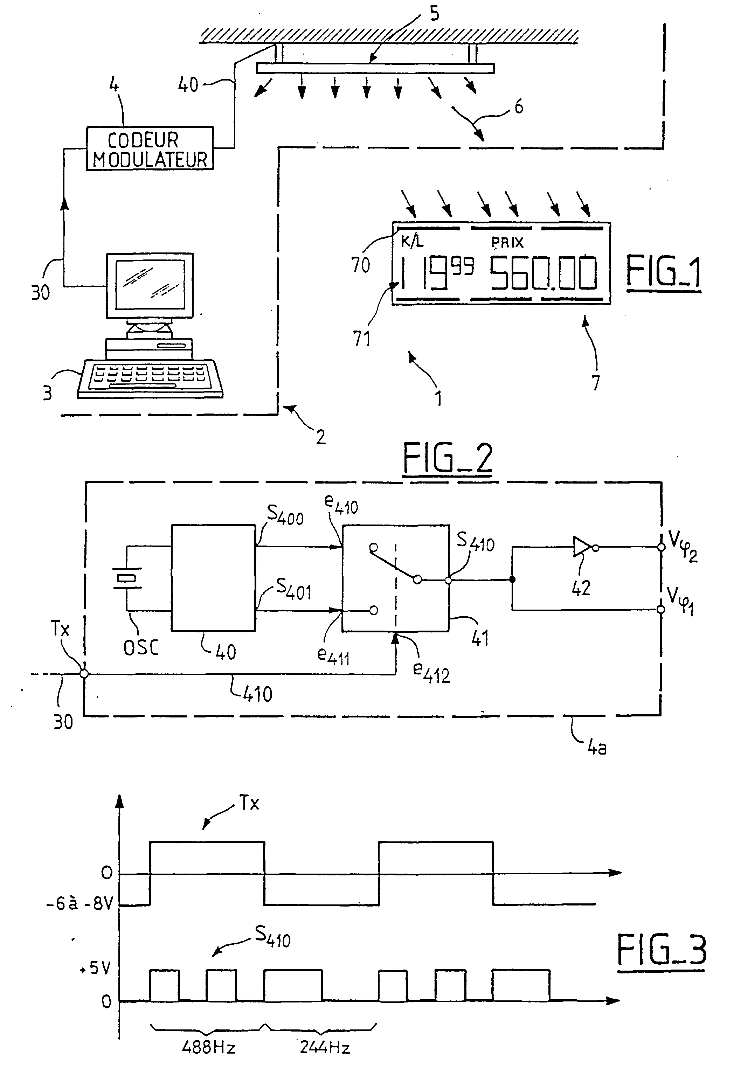

La figure 1 illustre schématiquement l'architecture générale d'un système 1 de mise à jour de données affichées par des étiquettes électroniques 7 disposées sur des gondoles (non représentées) de présentation d'articles dans une surface de vente.

La partie "émetteur" comprend avantageusement un micro-ordinateur 3 ou tout système de gestion et de traitement de signal numérique équivalent qui est relié à un codeur/modulateur 4 par une liaison appropriée, par exemple une liaison série de type "RS232". De façon schématique, on a représenté une liaison 40 véhiculant des signaux de commande élaborés par le codeur/modulateur 4, ces signaux modulant la lumière émise par un ou plusieurs tubes fluorescents 5. Ces tubes sont, *a priori,* allumés en permanence et fournissent l'éclairage ambiant de la surface de vente dans laquelle se trouvent les étiquettes électroniques 7. Celles-ci reçoivent la lumière émise et détectent la modulation, c'est-à-dire des fluctuations de la lumière ambiante ayant des caractéristiques déterminées. Pour ce faire, ces étiquettes comprennent des cellules optoélectroniques 70, convertissant l'énergie lumineuse en signaux électriques, des circuits décodeurs et des circuits de traitement de signaux qui seront précisés ci-après. Enfin, l'étiquette électronique 7 est munie d'un afficheur 71.

Lorsque l'on désire modifier tout ou partie des données affichées, pour une étiquette électronique, on envoie au codeur/décodeur 4 un message binaire destiné à une étiquette électronique. Pour ce faire, on utilise le micro-ordinateur 3. Le micro-ordinateur comporte, pour ce faire, une carte d'interface adaptée à la transmission et la réception de données en série, par exemple du type "RS232" précité, avec une horloge externe permettant la synchronisation de la modulation. Cette opération peut s'effectuer à l'aide du clavier ou par programme enregistré, par exemple pour une opération de mise à jour séquentielle systématique.

Les données mises à jour peuvent être de plusieurs types, mais dans la pratique elles concerneront essentiellement des données éminemment variables telle le prix ou des informations particulières sur des offres promotionnelles ou temporaires. Habituellement, l'étiquette électronique sera munie d'une zone d'affichage concernant le type de données qui vient d'être rappelé.

On va maintenant décrire de façon détaillée un premier mode de réalisation du système selon l'invention. Selon ce mode, la lumière émise est modulée, pendant les périodes de mise à jour des étiquettes électroniques, par deux fréquences distinctes : f₁ et f₂. Plus exactement, on substitue à l'alimentation secteur (de fréquence 50 Hz en France), des circuits d'alimentation propres à l'invention. Ces circuits génèrent des signaux carrés sous les deux fréquences précitées, f₁ et f₂, au rythme de signaux de commande reçus du micro-ordinateur 3, par la liaison série 30.

Pour fixer les idées, le choix s'est porté sur les deux fréquences suivantes : f₁ = 244 Hz et f₂ = 488 Hz., ce pour des raisons technologiques. En effet, un des circuits possibles utilisables dans le cadre de l'invention est un mircrocontrôleur, dont l'horloge interne bat à 8 Mhz. En divisant cette fréquence par un nombre entier *N*, puissance de 2, on peut obtenir une fréquence basse sous-multiple de l'horloge. Pour ce faire, on fait appel à un diviseur classique. Pour obtenir la fréquence f₁ = 244 Hz précitée, il suffit de choisir *N* = 2¹⁵ et en la remultipliant par 2, on obtient la fréquence f₂ = 488 Hz. La vitesse de transmission est choisie égale à 244 Bauds, ce qui est proche de la vitesse habituellement utilisée sur une liaison série du type précité, soit 300 Bauds.

La figure 2 est un bloc diagramme illustrant schématiquement la partie codeur 4a des circuits codeur/décodeur 4 de la figure 1.

Ce circuit codeur comprend une base de temps 40 pilotée par un oscillateur OSC à fréquence élevée et divisée pour obtenir, en sorties S₄₀₀ et S₄₀₁, deux signaux d'horloges, aux fréquences f₁ = 244 Hz et f₂ = 488 Hz précitées. On dispose, en cascade avec la base de temps 40, un commutateur 41 délivrant sur sa sortie S₄₁₀, l'un ou l'autre des signaux de fréquence précédents. Ce commutateur 41 est constitué à partir de circuits électroniques classiques, par exemple des amplificateurs opérationnels inverseurs à entrées différentielles, en technologie "CMOS". Il reçoit sur une première entrée e₄₁₀, les signaux de fréquence f₁, et sur une deuxième entrée e₄₁₁, les signaux de fréquence f₂.

Le commutateur 41 est commandé, sur une troisième entrée e₄₁₂, par les signaux Tx en provenance du micro-ordinateur 3, transmis sur la liaison série 30 et la liaison 410 interne aux circuits 4a.

La figure 3 est un chronogramme représentant un exemple de signaux de commande Tx (partie supérieure) et de signaux résultants, sur la sortie S₄₁₀ du commutateur 41.

Si on utilise une liaison "RS232", le "0" logique est représenté par une tension négative (-6 à -8V) et le "1" logique, par une tension positive.

Lorsque Tx est à l'état "1", la fréquence des signaux sur la sortie S₄₁₀ est 488 Hz, et 244 Hz, dans le cas contraire. Si le standard "TTL" est utilisé, les signaux alternent entre les valeurs 0 et +5V. Lorsque aucune transmission n'est active, le signal de liaison Tx est en permanence au niveau bas (-6 à -8V), la fréquence de sortie est alors de 244 Hz.

Pour des raisons pratiques, explicitées ci-après, il est nécessaire de disposer des signaux directs et inverses (déphasage de 180°), en sortie du codeur 4a. Pour ce faire, il suffit d'utiliser un inverseur 42, dont la sortie V_{ϕ2} fournit des signaux déphasés de 180° par rapport aux signaux V_{ϕ1}, copie directe des signaux délivrés sur la sortie S₄₁₀.

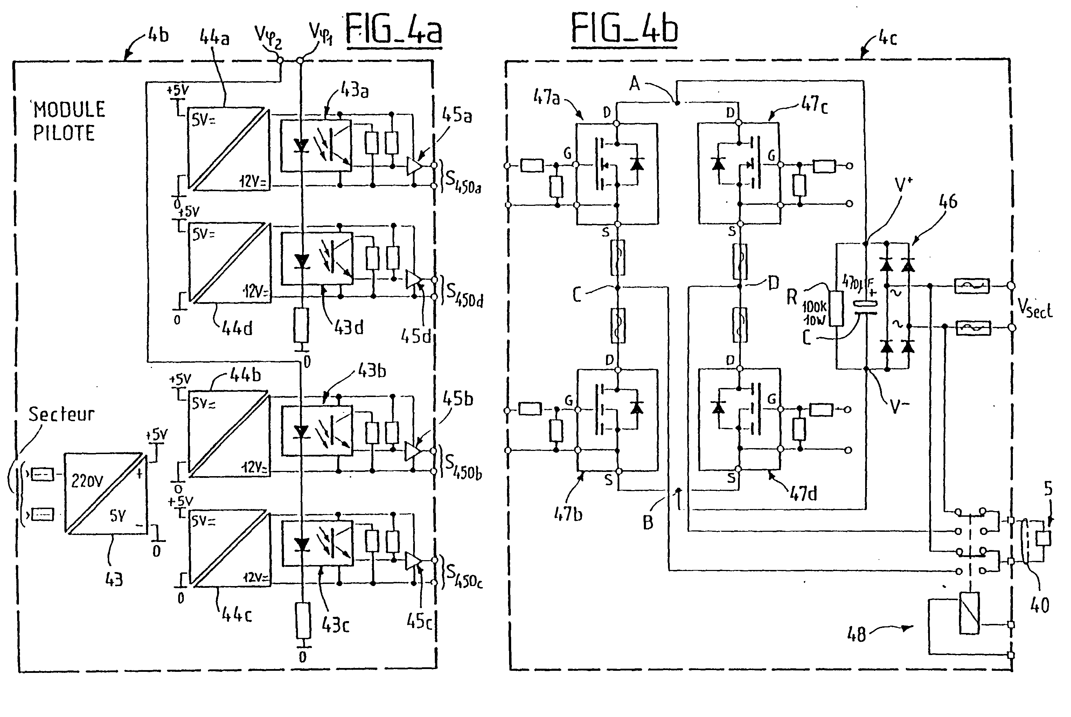

La partie modulateur des circuits codeur/décodeur 4 de la figure 1 est illustrée schématiquement par les figures 4a et 4b. Dans l'exemple illustré, on peut décomposer le modulateur lui-même en deux parties : un module 4b que l'on appellera pilote et le modulateur lui-même 4c ou étage de puissance. Sur ces figures, seules les éléments indispensables à la bonne compréhension de l'invention ont été référencés explicitement.

Comme il le sera montré en regard de la figure 4c, le modulateur 4c, découpant des signaux haute tension et sous une puissance relativement élevée, doit être isolé galvaniquement des circuits logiques du décodeur. Ces derniers circuits doivent être également protégés des interférences électromagnétiques (circuits de puissance fortement bruités).

Aussi dans une variante préférée de l'invention, on recourt à des coupleurs optoélectroniques qui présente la propriété d'offrir une forte isolation galvanique entre l'entrée et la sortie. Pour ce faire, on peut utiliser des compoants du type CNW 139.

De façon pratique, on prévoit deux paires de coupleurs, 43ₐ-43_{d} et 43_{b}-43_{c}, respectivement. Les coupleurs de chaque paire sont disposés en série et attaqués par l'une des tensions de commande, V_{ϕ1} ou V_{ϕ2}, en phase ou opposition de phase, respectivement. Chaque coupleur, 43ₐ à 43_{d}, comprend une diode photoémettrice, Dₐ à D_{d}, et un phototransistor, Tₐ à T_{d}, recevant le flux émis par la diode qui lui est associée. Les signaux de sortie des coupleurs optoélectroniques, 43ₐ à 43_{d}, sont transmis sur les sorties, S₄₅₀ₐ à S_{450d}, du module de pilotage 4b, via des amplificateurs, 45ₐ à 45_{d}. On peut choisir des amplificateurs opérationnels en technologie "CMOS".

Pour obtenir un découplage galvanique total, il est nécessaire d'alimenter les coupleurs optoélectroniques, 43ₐ à 43_{b}, et les amplificateurs, 45a à 45d, par des sources d'alimentations séparées, 44ₐ à 44_{d}. Dans l'exemple décrit, on a prévu des alimentations continu-continu, par exemple alimentées en +5V en entrée par une alimentation générale 43 et délivrant en sortie une tension de +12V. L'alimentation générale reçoit en entrée la tension secteur et la convertit en une tension continue de +5V. Toutes ces alimentations, 43 et 43a à 43d, sont avantageusement constituées à base d'onduleurs ou de dispositifs similaires comprenant un transformateur d'isolement entrée-sortie. On peut faire appel à des modules disponibles dans le commerce, par exemple du type "2CHR0512s", fournissant une tension +5 V continue à partir d'une tension +12 V continue..

La figure 4c illustre un exemple de réalisation de la partie modulateur 4c proprement dite, ou étage de sortie en puissance.

Dans l'exemple décrit, il est fait appel au découpage d'une tension continue, au rythme, soit de la fréquence f₁ = 244 Hz, soit de la fréquence f₂ = 488 Hz, selon une caractéristique importante de l'invention. La tension ainsi découpée se substitue, pendant les périodes de mise à jour (transmission d'informations) à la tension d'alimentation normale, c'est-à-dire la tension secteur à 50 Hz (pour la France).

Pour ce faire, l'étage de sortie 4c comprend un pont de diode 46 redressant le secteur V_{sect} et un filtrage du type "RC" en cascade. Ce simple filtrage est suffisant dans le cadre de l'invention. Il n'est pas nécessaire de réguler la tension ainsi obtenue entre les bornes V₊-V₋ du réseau parallèle résistance R₁- condensateur C₁. A titre d'exemple, on choisit une résistance R₁ de 100 kΩ/10 W et un condensateur électrolytique C₁ de 470 µF. La tension continue obtenue est d'environ 400 V. Cette tension, présente entre le bornes V₊-V₋, alimente un pont de quatre commutateurs électroniques, constitués par des transistors à effet de champ, ou FET, de puissance, en technologie "CMOS". Pour fixer les idées, on peut utiliser des transistors du type STE50N40 vendus dans le commerce sous la marque THOMSON.

Un modulateur, avec les éléments semi-conducteurs employés, peut alimenter plusieurs dizaines de tubes fluorescents classiques. Cent tubes consomment typiquement 30 A efficaces. En saturation, l'impédance interne des transistors est très faible, de l'ordre de 70 mΩ, ce qui entraîne de très faibles pertes.

Plus précisément, la tension filtrée alimente deux points extrêmes, A et B du pont. Les sources S des transistors inférieurs (sur la figure), 47b et 47d, sont reliées au point B (point inférieur), et les drains des transistors supérieurs (sur la figure), 47ₐ et 47_{b}, sont reliés au point A (point supérieur). De même, les sources S des transistors, 47a et 47b, sont reliées aux points C et D (points gauche et droit sur la figure), respectivement, et les drains des transistors, 47_{c} et 47_{d}, sont reliés aux point C et D, respectivement.

Chaque transistor, 47ₐ et 47_{d}, est commandé par l'un des signaux générés par le module de pilotage 4b, c'est-à-dire l'un des signaux présents sur les sorties S₄₅₀ₐ à S_{450d} des amplificateurs, 45ₐ à 45_{d}. A chaque instant, selon la polarité des tensions de commande, V_{ϕ1} ou V_{ϕ2}, c'est-à-dire selon qu'un "0" ou "1" logique est transmis au codeur 4a via la liaison 30 (figure 1), deux transistors FET d'une des diagonales du pont sont rendus passant. En effet les signaux présents sur les sorties S₄₅₀ₐ et S_{450d}, bien que découplés galvaniquement, sont des signaux en phase. Il en est de même des signaux présents sur les sorties S_{450b} et S_{450c}. Le pont de transistors, 47ₐ et 47_{d}, agit de façon similaire à un "flip-flop", au rythme des signaux de commande. Ceux-ci ont deux fréquences propres, f₁ et f₂, comme il a été indiqué. Le découpage de la tension filtrée s'effectue donc aussi selon deux fréquences distinctes.

Les tubes fluorescents 5 sont branchés entre les points C et D pendant les périodes de transmission de données. Ainsi, la fréquence de la tension d'alimentation est, soit de 244 Hz ("0" logique), soit de 488 Hz ("1" logique).

En temps normal, les tubes fluorescents 5 sont alimentés par le secteur directement, soit par une tension sinusoïdale à 50 Hz. Pour ce faire, on peut utiliser un relais 48 à deux voies. En temps normal également , le relais est au repos (premier état) et les tubes fluorescents sont alimentés par le secteur. Lors des transmissions de données, le relais reçoit un signal de commande approprié, qui peut être généré par le codeur et passe à l'état excité (second état). Les tubes fluorescents sont alors alimentés par la tension découpée.

La luminosité ambiante d'un local éclairé par des tubes fluorescents est typiquement de l'ordre de 700 Lux, s'ils sont alimentés par une tension à 50 Hz. Si la fréquence passe à 244 Hz, la luminosité décroît à 350 Lux environ et à 175 Lux environ, pour une fréquence de 488 Hz.

On comprend aisément que si l'on dispose d'un organe sensible à l'intensité lumineuse, on puisse discriminer ces trois états, les deux derniers ne se présentant que dans les phases actives de transmission de données et représentant des "0" ou des "1" logiques.

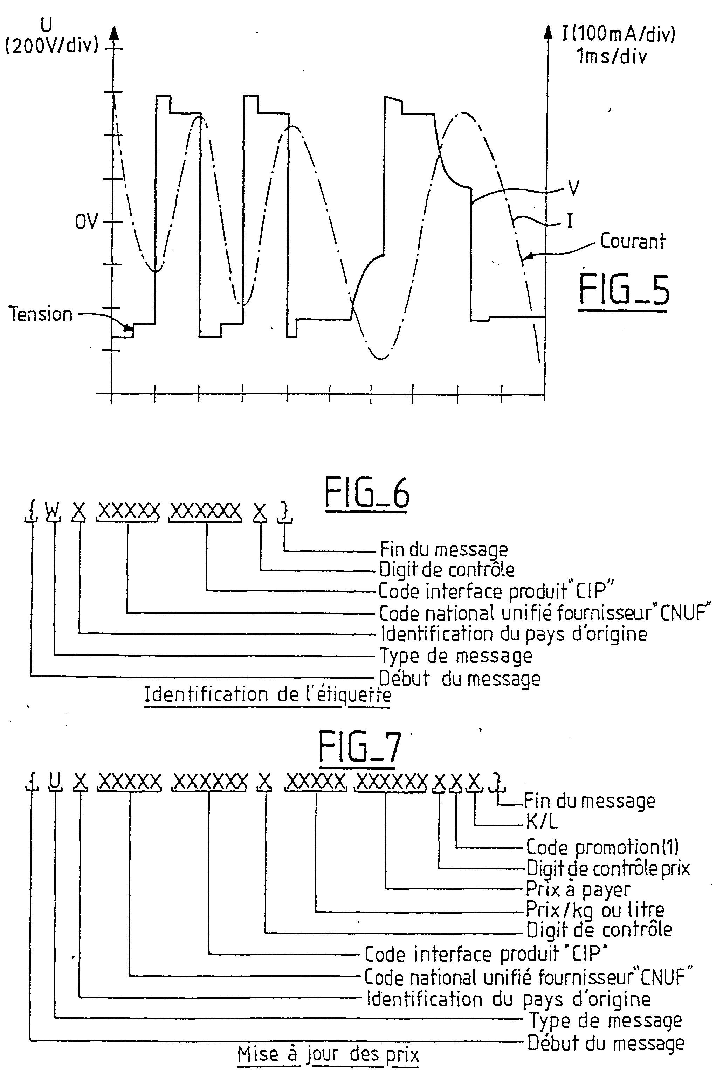

La figure 5 est un chronogramme illustrant schématiquement des courbes d'évolution typique du courant *I* et de la tension *U* en fonction de la fréquence du découpage. Les deux premières impulsions en tension représentées ont une fréquence de 488 Hz et la troisième de 244 Hz. On constate que l'amplitude crête à crête du courant *I* traversant les tubes fluorescents. L'intensité lumineuse émise par un tube fluorescent étant conditionnée par l'amplitude du courant, on comprend que celle-ci suive une loi similaire.

Avant de décrire l'organe sensible aux variations d'intensité lumineuse, notamment une étiquette électronique, il parait tout d'abord utile de détailler un protocole de communication utilisable dans le cadre de l'invention.

Pour la liaison série, on peut faire appel, comme il a été indiqué, à une transmission série de type asynchrone "RS232", 8 bits avec 1 bit de STOP, sans parité. La vitesse de transmission est choisie égale à 244 Bauds.

Pour l'application préférée de l'invention, le besoin en affichage est limité typiquement à 10 chiffres de 0 à 9. On tire parti de cette caractéristique en transcodant ces chiffres de manière à limiter les phénomènes de fluctuation de la lumière (battement). En effet, la modulation se traduisant par d'importantes variations de l'intensité lumineuse émise par les tubes fluorescents, ces fluctuations sont perceptibles par l'oeil humain et sont gênantes. Pour limiter cette gêne, on peut faire appel à des codes particuliers, pour les quels un même message transmis se traduit par des alternances de "0" et de "1" qui minimisent les effets indésirables de battement. A titre d'exemple, une alternance de "0" et de "1" ne provoquent pas les mêmes sensations que deux "0" et deux"1" en succession. La Demanderesse a effectué des recherches qui ont permis de choisir expérimentalement les meilleures combinaisons possibles de codes. La table ci-dessous donne un exemple d'un tel transcodage décimal -hexadécimal :

| | | | | | | | | | | |
|---|---|---|---|---|---|---|---|---|---|---|
| Chiffres | 0 | 1 | 2 | 3 | 4 | 5 | 6 | 7 | 8 | 9 |
| Caractères codés Hexa | $DF | $77 | $5F | $EF | $B5 | $BB | $6F | $75 | $B7 | $BF |

S'il existe plus d'une étiquette électronique, ce qui est le cas en général, l'opération de mise à jour des données affichées par une étiquette électronique à mettre à jour comporte deux phase.

La première phase concerne son identification ou son adressage. En effet, seule cette étiquette électronique particulière doit réagir au message transmis. Elle doit ce "reconnaitre". Aussi, un premier message concerne l'identification. La figure 6 illustre un exemple de message d'identification comprenant 16 caractères. Ce message débute par un caractère particulier, par exemple le caractère "{", et se termine par un autre caractère particulier, par exemple le caractère "}". Le deuxième caractère indique le type de message, par exemple "W" pour un message d'identification. Le troisième caractère indique le code pays d'origine, les cinq caractères suivants indiquent le "Code National Unifié Fournisseur" ou "CNUF", les six caractères suivants indiquent le "Code Interface Produit" ou "CIP" et l'avant dernier caractère est un caractère de contrôle. Une étiquette dédiée à un produit particulier va pouvoir s'identifier en décodant un message qui lui est destiné et se positionner en un état de veille pour recevoir un message de mise à jour.

La seconde phase concerne la mise à jour proprement dite. L'étiquette en état de veille attend un message de mise à jour. La figure 7 illustre un exemple d'un tel message qui comprend 30 caractères. Comme précédemment, le message comporte des caractères d début et fin, "{" et "}", respectivement. Le deuxième caractère transmis représente le type de message, par exemple "U" pour mise à jour. Le troisième caractère représente de nouveau le code pays d'origine, les cinq caractères suivants indiquent le "Code National Unifié Fournisseur" ou "CNUF", les six caractères suivants indiquent le "Code Interface Produit" ou "CIP" et le caractère suivant est un caractère de contrôle. Les cinq caractères suivants représentent le nouveau prix au kilogramme ou au litre, les six caractères suivants, le nouveau prix, le caractère suivant, un caractère de contrôle de prix, le caractère suivant, un code promotion, et l'avant dernier caractère, la dénomination "kilogramme" ou "litre".

Dans les messages représentés sur les figures 6 et 7, le caractère "X" symbolise le code d'un nombre arbitraire allant de 0 à 9. Les caractères de contrôle sont générés par calcul, par exemple en faisant appel à la norme de codage "EAN13" et transmis comme un chiffre allant de 0 à 9. Les treize caractères "utiles" : prix au Kg ou litre, prix, code promotion et la dénomination "kilogramme" ou "litre" sont mémorisés dans l'étiquette électronique jusqu'à la prochaine mise à jour et affichés par l'organe de visualisation 71.

On va maintenant décrire la partie récepteur du système, c'est-à-dire l'étiquette électronique dans l'application préférée de l'invention.

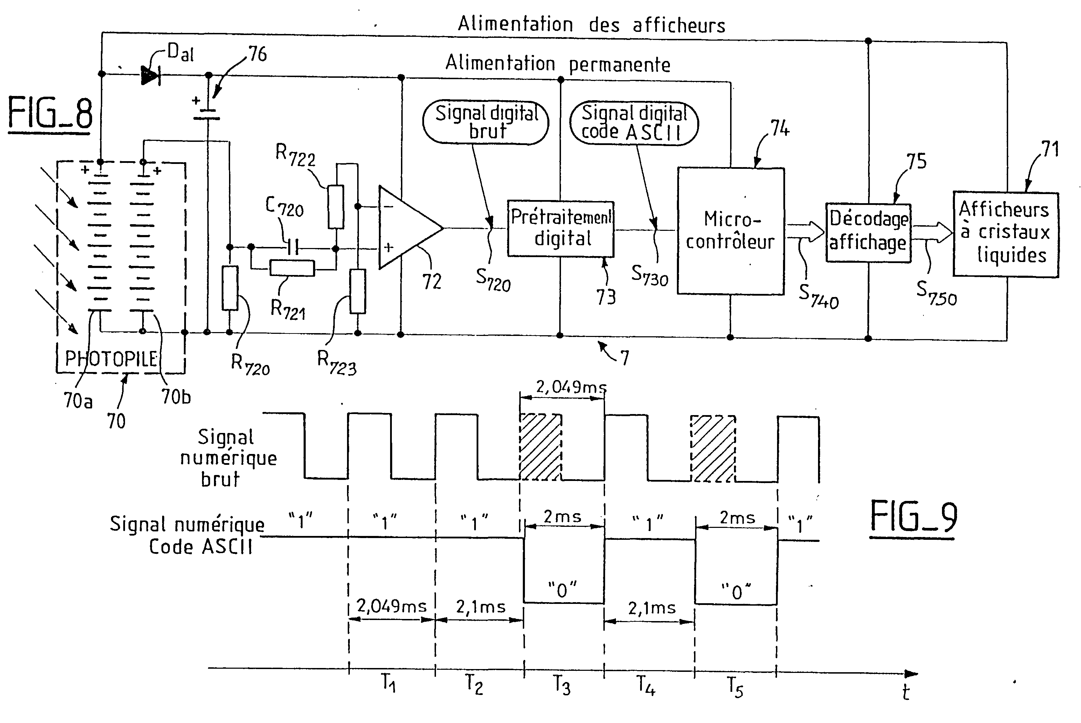

La figure 8 est un bloc diagramme illustrant schématiquement les principaux organes de l'étiquette électronique 7.

Celle-ci comprend tout d'abord un élément photo-électrique 70. En réalité cet élément comprend une première cellule photoélectrique, 70ₐ, destinée à fournir de l'énergie électrique, et une seconde cellule électrique, 70_{b}, destinée à capter les signaux codés transmis par l'énergie lumineuse. Il est en outre nécessaire de maintenir en permanence l'alimentation de la plupart des circuits, même lorsque l'étiquette électronique n'est pas éclairée, à l'exception des circuits d'affichage. Pour ce faire, la première cellule photoélectrique charge une batterie 76 via une diode anti-retour Dₐₗ. Cette disposition permet d'éviter d'avoir recourt à des piles, relativement onéreuses en grand nombre et qui doivent être changées en fin de vie.

La cellule photo-électrique 70ₐ est chargé par une résistance R₇₂₀ en parallèle avec un réseau de type "RC" comprenant une résistance R₇₂₁ en parallèle avec un condensateur C₇₂₀, en série avec un diviseur de tension comprenant deux résistances en série, R₇₂₂ et R₇₂₃. Le point milieu du diviseur de tension est connecté à la borne "+" d'un amplificateur opérationnel 72 et la sortie du réseau "RC" à l'entrée "-" de cet amplificateur opérationnel 72. Ces circuits forment un étage de conversion et de mise forme des signaux lumineux en sortie de la cellule photoélectrique 70_{b} en signaux binaires.

Pour fixer les idées, les résistances et le condensateur ont les valeurs numériques suivantes : R₇₂₀ = 1 MΩ, R₇₂₁ = 40 MΩ, R₇₂₂ = R₇₂₃ =100 KΩ et C₇₂₀ = 33nF. L'amplificateur opérationnel peut être du type "LMC6041".

La constante de temps due au circuit "RC" permet d'obtenir les fonctions précitées, et la présence du condensateur C720 (en parallèle avec une très forte résistance) permet d'arrêter la composante continue des signaux, composante due à la lumière ambiante. Le dispositif n'est donc sensible qu'au signaux utiles.

En sortie S₇₂₀ de l'amplificateur 72 on obtient des signaux à deux états que l'on appellera signaux "bruts". En effet il s'agit de signaux carrés dont la fréquence, 244 ou 488 Hz, est déterminée par la fréquence des fluctuations de la lumière, lors des périodes de transmission de données. Il reste à reconstituer à partir de ces signaux carrés le message d'origine, c'est-à-dire un code ASCII, par exemple.

Pour ce faire, on dispose, en cascade, un circuit de prétraitement numérique 74. Ce circuit peut être réalisé, par exemple, à l'aide d'un monostable fournissant dont la base de temps est de 2,1 ms et redéclanchable par les signaux d'entrée sur front montant. A titre d'exemple, on peut utiliser un double monostable du type "74HC123".

La figure 9 est un chronogramme représentant des exemples de signaux d'entrée du monostable 73 et de sa sortie. On a représenté sur l'axe des temps t, cinq intervalles de temps arbitraires, dénommés T₁ à T₅, correspondants à cinq périodes successives des signaux de sortie du monostable 73. Dans l'exemple représenté, pendant l'intervalle de temps T₁, les signaux d'entrée du monostable 73 ont une fréquence de 488 Hz, soit une période de 2,049 ms et la sortie du monostable 73 est au "1" logique. La période naturelle du monostable étant de 2,1 ms, celui-ci va être redéclanché sur le front montant du signal d'entrée à 2,049 ms. Par contre, pendant l'intervalle de temps T₂, le signal d'entrée a une fréquence de 244 Hz et la demi-période égale à 2,049 ms. Il manque donc une impulsion (zone hachurée). La sortie du monostable 73 va retomber à zéro à la fin de l'intervalle T₂, car celui-ci n'est pas redéclanché. L'intervalle de temps T₃ a une durée de 2 ms environ, car le monostable 73 va être redéclanché sur le front montant des signaux d'entrée (fin de la demi-période) des signaux à 244 Hz. De même, à la fin de l'intervalle de temps T₄, le monostable 73 n'est pas redéclanché, le signal de sortie retombe au "0" logique. T₄ dure 2,1 ms (base de temps du monostable). A la fin de l'intervalle de temps T₅, le monostable est de nouveau déclenché par le front montant du signal d'entrée (fin de la demi-période à 244 Hz). Le signal de sortie est alors au "1" logique. On restitue ainsi en sortie le signal de codage initial en code "ASCII". La séquence binaire partielle, dans l'exemple choisi, est donc "11011".

Le message codé ainsi reconstitué est ensuite transmis à des circuits de traitement de l'information 74, constitués par exemple par un microcontrôleur du type "MC68HC811E2FN", comprenant des moyens de stockage interne. Comme il a été indiqué, lors d'une mise à jour, il existe deux messages successifs. Un premier message identifie l'étiquette (adressage). Les circuits 74 reconnaissent, de façon classique, un message d'identification. Cette reconnaissance permet de les positionner en un état d'attente du message de mise à jour proprement dit. Les données correspondant à cette mise à jour "rafraichissent" ou effacent celles précédemment enregistrées. Ces nouvelles données sont mémorisées jusqu'à ce qu'une nouvelle mise à jour soit effectuée.

Pour ce faire, comme signalé, tous les circuits, à l'exception des circuits d'affichage (voir ci-après), sont alimentés en permanence par la batterie 76.

Les circuits 74 commandent des organes d'affichage 76, par exemple à cristaux liquides, via des circuits décodeurs classiques 75. Par ce biais, l'affichage est également mise à jour et correspond aux nouvelles données transmises.

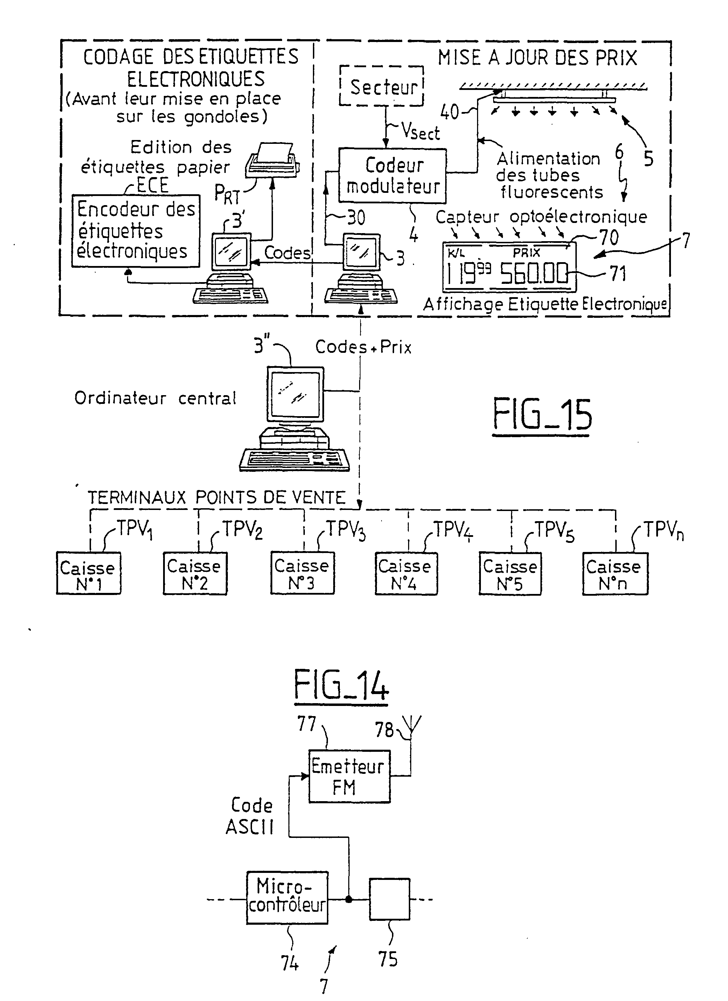

Dans une variante supplémentaire illustrée par la figure 14, les signaux en sortie S₇₃₀, c'est-à-dire le code "ASCII" reconstitué, peut être réémis pour vérification, à l'aide d'un émetteur radio 77 muni d'une antenne 78, par exemple sur une bande FM. Ce code module alors une fréquence porteuse. L'émission est captée par une installation centrale et le code reconstitué par l'étiquette est comparé au code transmis par le micro-ordinateur 3 sur la liaison série 30. Il existe naturellement un décalage dans le temps, puisque, par exemple, un "1" est généré après contrôle qu'un signal de durée supérieure à 6,2 ms ait été reçu par l'étiquette 7.

On peut utiliser un module de transmission radio distribué par "RADIOMETRIX LTD", du type TXM-418-A. La portée est d'environ 30 m et la fréquence porteuse de 433,92 Mhz. La bande passante est de 10 Kbits/s, ce qui est largement dimensionné pour l'opalisation envisagée.

Pour fixer les idées, la mise à jour d'une étiquette nécessite environ 2 secondes. On peut donc mettre à jour 30 étiquettes par minute, soit 300 étiquettes en 10 mn.

On va maintenant décrire, de façon plus détaillée, en regard de la figure 15, un exemple d'application préférée du système selon l'invention, c'est-à-dire son application à la mercatique.

Dans ce qui précède, on a décrit essentiellement la phase de mise à jour des prix sur les étiquettes électroniques et d'informations "volatiles". Mais il existe une phase préliminaire, avant la mise en place des étiquettes électroniques sur les gondoles. En effet, chaque étiquette électronique doit subir un encodage avec édition d'une étiquette papier du code article et de sa référence. Ces données sont enregistrées dans les circuits de traitement d'information 74, soit dans une mémoire volatile, soit de préférence dans une mémoire reprogrammable, par exemple du type "EEPROM" ou similaire.

Au cours de sa vie, une étiquette électronique peut être affectée à différents articles. Bien qu'il soit théoriquement pensable de mettre à jour les étiquettes électroniques pour toutes sortes de données, on n'utilisera en pratique le procédé selon l'invention que pour la mise à jour des données dites "volatiles" (prix, etc.). Les autres données sont enregistrées dans l'étiquette électronique par encodage initiale.

Pour ce faire dans une organisation réelle, correspondant à une surface de vente, le micro-ordinateur 3 est relié à l'ordinateur central 3" de cette surface de vente qui lui communique des données composites du type "codes articles + prix" qui sont enregistrés dans la mémoire du micro-ordinateur 3. Dans l'exemple illustré, la partie "codes articles" est transmise à un micro-ordinateur 3' spécialisé pour cette tâche qui commande un dispositif encodeur ECE d'étiquettes électroniques. Il s'agit d'un dispositif bien connu de codage par voie électrique ou optique. Une étiquette électronique particulière pourra par la suite être identifiée par ces données enregistrées. L'imprimante PRT édite les données enregistrées notamment pour contrôle des affectations.

A ce stade, l'encodage peut être complété par une séquence de test. Pour ce faire, on peut utiliser un tube fluorescent commandé par le micro-ordinateur 3' ou par le dispositif codeur, de manière similaire au procédé général.

Enfin, les terminaux points de ventes TPV₁ à TPVₙ présents dans la surface de ventes reçoivent avantageusement, en temps réel, les mêmes informations que le micro-ordinateur 3. Ce type de terminaux étant habituellement muni d'un lecteur optique de caractères barres, la mise à jour des prix s'effectue en simultanéité.

A la lecture de ce qui précède, on constate aisément que l'invention atteint bien les buts qu'elle s'est fixés.

On ne saurait cependant limiter la portée de l'invention aux modes de réalisation spécifiquement décrits, notamment en relation avec les figures 1 à 15. En particulier, les exemples numériques n'ont été indiqués que pour mieux préciser l'invention. Ces données dépendent essentiellement de l'application spécifique et ne constituent, comme les composants utilisés, qu'un choix technologique à la portée de l'Homme de Métier.

Il doit être clair aussi que, bien que particulièrement adaptée à des applications de mercatique, pour la mise à jour des données affichées sur une étiquette électronique, on ne saurait cantonner l'invention à ce seul type d'applications. Elle s'applique tout aussi bien à de nombreux types de transmissions utilisant, toutes les fois que l'on peut utiliser l'éclairage artificiel ambiant comme vecteur de modulation.

A ce sujet, bien que les tubes de type fluorescent soient particulièrement adaptés dans le cadre de l'invention, les tubes de type halogène permettent également un fonctionnement dans de très bonnes conditions, car l'ionisation est également instantanée. Bien que l'efficacité des ampoules à incandescence soit plus réduite, du fait de la rémanence due à leur résistivité, celles-ci restent cependant utilisables dans le cadre de l'invention.

## Revendications

1. Système de transmission de messages comprenant un émetteur et au moins un récepteur (7), l'émetteur comprenant un générateur (3) de données numériques représentatives d'un message, des moyens de codage (4a) de ces données en un code numérique série déterminé et des moyens de modulation (4b-4c) selon un mode déterminé d'un rayonnement électromagnétique, chaque récepteur comprenant au moins des moyens sensibles (70b) audit rayonnement électromagnétique modulé le convertissant en signaux électriques et des moyens de décodage (72, 73) permettant de reconstituer ledit message à partir des signaux convertis, lesdits moyens de modulation (4b-4c) commandant des organes d'éclairage en lumière visible (5), de manière à modifier l'intensité de l'énergie lumineuse émise (6) selon deux états distincts pendant les périodes de transmission desdits messages, et lesdits moyens sensibles au rayonnement électromagnétique (70b) détectant ces deux états de façon à délivrer des signaux électriques présentant deux états distincts, **caractérisé en ce que** lesdits moyens de codage (4a) génèrent des premiers et seconds signaux numériques codés ayant une première et une seconde fréquence représentant des premier et second états logiques desdites données numériques, en ce que les moyens de modulation (4b-4c) modulent l'intensité lumineuse émise (6) selon l'une ou l'autre de ces fréquences en fonction de l'état logique dudit code numérique, et en ce que lesdits moyens de décodage (72, 73) génèrent un signal numérique à un premier état logique lorsque lesdits moyens sensibles au rayonnement électromagnétique (70b) détectent un rayonnement modulé selon la première fréquence, et génèrent un signal numérique à un second état logique lorsque ceux-ci détectent un rayonnement modulé selon la seconde fréquence.

2. Système selon la revendication 1, **caractérisé en ce que** lesdits moyens de codage (4a) comprennent en outre des moyens (42) pour générer en sortie deux séries de signaux numériques de commande, copies des signaux numériques codés, une première série de signaux de commande étant en phase avec les signaux numériques de commande, l'autre étant en opposition de phase avec ces signaux, en ce que lesdits moyens de modulation (4b-4c) comprennent au moins un pont à quatre branches, comportant un commutateur électronique (47ₐ-47_{d}) disposé sur chaque branche, les commutateurs de deux branches opposées sur une première diagonale du pont recevant les signaux d'une première série, les commutateurs de deux branches opposées sur l'autre diagonale recevant les signaux de la seconde série, en ce que deux points extrêmes du pont (A-B) sont connectés à une tension d'alimentation déterminée et lesdits organes d'éclairage en lumière visible (5) sont connectés aux deux autres points extrêmes du pont (C-D) de manière à ce qu'à chaque instant une seule diagonale du pont soit activée et transmettent une énergie d'alimentation aux organes d'éclairage en lumière visible (5), au rythme des variations desdites deux séries de signaux de commande.

3. Système selon l'une quelconque des revendications précédentes, **caractérisé en ce que** lesdits organes d'éclairage en lumière visible sont des tubes fluorescents (5) commandés par lesdits moyens de modulation (4b-4c).

4. Procédé de transmission de messages entre un émetteur et au moins un récepteur (7), comprenant une phase d'émission comportant i) une étape de génération de données numériques représentatives d'un message, ii) une étape de codage de ces données en un code numérique série déterminé et iii) une étape de modulation selon un mode déterminé d'un rayonnement électromagnétique; une phase de réception comportant a) une étape de détection du rayonnement électromagnétique modulé, b) une étape de conversion du rayonnement électromagnétique détecté en signaux électriques et c) une étape de décodage permettant de reconstituer ledit message à partir des signaux convertis, ladite étape de modulation iii) consistant à moduler de la lumière visible émise en alimentant des organes d'éclairage émettant cette lumière visible (5) à l'aide de signaux modulés selon ledit mode, de manière à modifier l'intensité de la lumière émise selon deux états distincts pendant les périodes de transmission desdits messages, les étapes de détection a) et de conversion b) consistant à générer des signaux électriques présentant deux états de façon à délivrer des signaux électriques numériques présentant deux états distincts en synchronisme avec ladite modulation de la lumière visible, et l'étape de décodage c) consistant à reconstituer à partir de ces signaux numériques à deux états desdites données numériques représentatives du message, **caractérisé en ce que** ladite étape de modulation iii) consiste à générer une tension d'alimentation desdits organes d'éclairage en lumière visible ayant une première ou une seconde fréquence déterminée en fonction de l'état logique desdites données numériques rerésentatives du message, de manière à faire varier l'intensité lumineuse émise entre deux états déterminés.

5. Procédé selon la revendication 4, **caractérisé en ce que** lesdites données reconstituées sont réémises vers ledit émetteur par voie hertzienne (77-78), afin de vérifier la bonne réception.

6. Procédé selon les revendications 4 ou 5, **caractérisé en ce que** ledit message est émis en deux séquences décalées dans le temps, une première séquence véhiculant des données numériques d'identification et une seconde séquence véhiculant des données de mise à jour, en ce qu'il comprend une étape de sélection d'au moins un récepteur (7) à l'aide de la séquence véhiculant des données d'identification et une étape de démémorisation, dans chaque récepteur (7) sélectionné lors de l'étape précédente, des données véhiculées par la séquence véhiculant des données numériques de mise à jour.

7. Procédé selon l'une quelconque des revendications 4 à 6, **caractérisé en ce que** lesdites données numériques générées représentatives du message sont codées selon un code série de type "ASCII" et en ce qu'il comprend une étape de transcodage en un code hexadécimal minimisant les effets visibles par l'oeil humain des variations de l'intensité lumineuse dues à ladite modulation.

8. Application du système selon l'une quelconque des revendications 1 à 3, à la mise à jour des données affichées par une étiquette électronique (7), ces étiquettes électroniques constituant lesdits récepteurs, **caractérisée en ce que** chaque étiquette électronique comprend au moins une cellule photoélectrique (70b) captant et convertissant ladite énergie lumineuse en signaux électriques, des moyens de conversion (72) des signaux électriques en signaux numériques à deux états distincts selon l'état de ladite modulation de la lumière émise, des moyens de décodage (73) de ces signaux numériques à deux états, de manière à reconstituer le message véhiculé par les données numériques générées dans ledit émetteur, des moyens de traitement de l'information (74) mémorisant les données décodées et des moyens d'affichages (75-76) des données mémorisées.

## Patentansprüche

1. System zur Übertragung von Nachrichten mit einem Sender und wenigstens einem Empfänger (7), wobei der Sender einen Generator (3) für eine Nachricht darstellende numerische Daten, Mittel zum Codieren (4a) dieser Daten in einen bestimmten numerischen seriellen Code und Mittel zur Modulation (4b, 4c) einer elektromagnetischen Strahlung entsprechend einem bestimmten Modus umfasst, jeder Empfänger auf die genannte modulierte elektromagnetische Strahlung empfindliche und diese in elektrische Signale umwandelnde Mittel (70b) und eine Wiederherstellung der Nachricht anhand der umgewandelten Signale ermöglichende Mittel zum Decodieren (72, 73) wenigstens umfasst, die genannten Mittel zum Modulieren (4b-4c) Mittel zum Leuchten mit sichtbarem Licht (5) steuern, um so die Intensität der ausgestrahlten Lichtmenge(6) entsprechend zweier verschiedener Zustände während der Übertragungsperioden der genannten Nachrichten zu modifizieren, und die genannten auf elektromagnetische Strahlung empfindlichen Mittel (70b) diese beiden Zustände erfassen und unterschiedliche Zustände darstellende elektrische Signale liefern, **dadurch gekennzeichnet, dass** die genannten Mittel zum Codieren (4a) codierte erste und zweite numerische Signale mit erste und zweite logische Zustände der genannten numerischen Daten darstellenden ersten und zweiten Frequenzen erzeugen, dass die Mittel zum Modulieren (4b-4c) die ausgestrahlte Lichtintensität (6) entsprechend einer dieser Frequenzen als Funktion des logischen Zustands des genannten numerischen Codes modulieren, und dass die genannten Mittel zum Decodieren (72, 73) ein numerisches Signal in einem ersten logischen Zustand erzeugen, wenn die genannten auf elektromagnetische Strahlung empfindlichen Mittel (70b) eine entsprechend der ersten Frequenz modulierte Strahlung erfassen und ein numerisches Signal in einem zweiten logischen Zustand erzeugen, wenn diese eine entsprechend der zweiten Frequenz modulierte Strahlung erfassen.

2. System nach Anspruch 1, **dadurch gekennzeichnet, dass** die genannten Mittel zum Codieren (4a) außerdem Mittel (42) zum Erzeugen von zwei numerischen Steuersignalserien am Ausgang als Kopien der codierten numerischen Signale umfassen, wobei eine erste Steuersignalserie in Phase mit den numerischen Steuersignalen und die andere zu diesen Signalen gegenphasig ist, dass die genannten Mittel zur Modulation (4b-4c) wenigstens eine Brücke mit vier Zweigen umfassen und auf jedem Zweig ein elektronischer Kommutator (47ₐ-47_{d}) angeordnet ist, wobei die Kommutatoren von zwei gegenüberliegenden Zweigen auf einer ersten Diagonale der Brücke die Signale einer ersten Serie empfangen, die Kommutatoren von zwei gegenüberliegenden Zweigen auf der anderen Diagonale die Signale der zweiten Serie empfangen, dass die beiden Endpunkte der Brücke (A-B) mit einer bestimmten Versorgungsspannung verbunden sind und die genannten Mittel zum Leuchten mit sichtbarem Licht (5) mit den beiden anderen Endpunkten der Brücke (C-D) verbunden sind, so dass zu jedem Zeitpunkt eine einzige Diagonale der Brücke aktiviert ist und eine Versorgungsenergie auf die Mittel zum Leuchten mit sichtbarem Licht (5) im Rhythmus der Variationen der genannten beiden Steuersignalserien übertragen wird.

3. System nach einem der vorhergehenden Ansprüche, **dadurch gekennzeichnet, dass** die genannten Mittel zum Leuchten mit sichtbarem Licht durch die genannten Mittel zur Modulation (4b-4c) gesteuerte fluoreszierende Röhren (5) sind.

4. Verfahren zur Übertragung von Nachrichten zwischen einem Sender und wenigstens einem Empfänger (7) mit einer Sendephase, die umfasst:
i) einen Schritt zur Erzeugung von eine Nachricht darstellenden numerischen Daten,
ii) einen Schritt zur Codierung dieser Daten in einen bestimmten seriellen numerischen Code, und
iii) einen Schritt zur Modulation entsprechend einem bestimmten Modus einer elektromagnetischen Strahlung;
einer Empfangsphase, die umfasst:
a) einen Schritt zur Erfassung der modulierten elektromagnetischen Strahlung,
b) einen Schritt zur Umwandlung der erfassten elektromagnetischen Strahlung in elektrische Signale, und
c) einen Schritt zur Decodierung, der es ermöglicht, anhand der umgewandelten Signale die genannte Nachricht wiederherzustellen,
wobei der genannte Schritt zur Modulation iii) darin besteht, das ausgestrahlte sichtbare Licht zu modulieren, indem die das sichtbare Licht (5) austrahlenden Mittel zum Leuchten mithilfe von entsprechend dem genannten Modus modulierten Signalen versorgt werden, so dass die Intensität des ausgestrahlten Lichts entsprechend den beiden unterschiedlichen Zuständen während der Übertragungsperioden der genannten Nachrichten modifiziert wird, die Schritte zur Erfassung a) und Umwandlung b) darin bestehen, zwei elektrische Signale, die zwei Zustände darstellen, zu erzeugen, um so numerische elektrische Signale zu liefern, die zwei unterschiedliche Zustände in Gleichlauf mit der genannten Modulation des sichtbaren Lichts darstellen, und der Schritt zur Decodierung c) darin besteht, anhand dieser numerischen Signale in zwei Zuständen die genannten die Nachricht darstellenden numerischen Daten wiederherzustellen, **dadurch gekennzeichnet, dass** der genannte Schritt zur Modulation iii) darin besteht, eine Versorgungsspannung für die genannten Mittel zum Leuchten mit sichtbarem Licht zu erzeugen, die als Funktion des logischen Zustands der genannten eine Nachricht darstellenden numerischen Daten eine bestimmte erste oder zweite Frequenz aufweist, um so die ausgestrahlte Lichtintensität zwischen zwei bestimmten Zuständen zu variieren.

5. Verfahren nach Anspruch 4, **dadurch gekennzeichnet, dass** die genannten wiederhergestellten Daten auf dem Funkweg (77-78) wieder zum genannten Sender übertragen werden, um den guten Empfang zu überprüfen.

6. Verfahren nach Anspruch 4 oder 5, **dadurch gekennzeichnet, dass** die genannte Nachricht in zwei zeitversetzten Folgen ausgestrahlt wird, wobei eine erste Folge numerische Daten zur Identifikation und eine zweite Folge Daten zur Aktualisierung trägt, dass es einen Schritt zur Auswahl wenigstens eines Empfängers (7) mithilfe der die Daten zur Identifikation tragenden Folge und einen Schritt zum Löschen von Daten, die von der Folge mit den numerischen Daten zur Aktualisierung getragen werden, in jedem ausgewählten Empfänger (7) während des vorhergehenden Schritts aufweist.

7. Verfahren nach einem der Ansprüche 4 bis 6, **dadurch gekennzeichnet, dass** die genannten erzeugten die Nachricht darstellenden numerischen Daten entsprechend einem seriellen Code vom Typ "ASCII" codiert sind, und dass es einen Schritt zur Umcodierung in einen hexadezimalen Code aufweist, welcher die vom menschlichen Auge erkennbaren Effekte der Variationen der Lichtintensität aufgrund der genannten Modulation minimalisiert.

8. Verwendung des Systems nach einem der Ansprüche 1 bis 3 zur Aktualisierung von von einem elektronischen Etikett (7) angezeigten Daten, wobei diese elektronischen Etiketten die genannten Empfänger bilden, **dadurch gekennzeichnet, dass** jedes elektronische Etikett wenigstens eine photoelektrische Zelle (70b), welche die genannte Lichtenergie fängt und in elektrische Signale umwandelt, Mittel zur Umwandlung (72) von elektrischen Signalen in numerische Signale in zwei unterschiedlichen Zuständen entsprechend dem Zustand der genannten Modulation des ausgestrahlten Lichts, Mittel zur Decodierung (73) dieser numerischen Signale in zwei Zuständen um so die von den im genannten Sender erzeugten numerischen Daten getragene Nachricht wiederherzustellen, Mittel zur Bearbeitung von Informationen (74), welche die decodierten Daten speichern, und Mittel zum Anzeigen (75-76) der gespeicheten Daten aufweist.

## Claims

1. A message transmission system comprising a transmitter and at least one receiver (7), the transmitter comprising a digital data generator (3), said digital data being representative of the message, means (4a) for encoding said data into a specific digital serial code and means (4b - 4c) for modulating an electromagnetic radiation in accordance with a specific mode, each receiver comprising at least means (70b) sensitive to said modulated electromagnetic radiation and converting it into electric signals, and decoding means (72, 73) enabling the said message to be reconstituted from the converted signals, the said modulation means (4b - 4c) controlling visible light illuminating means (5) so as to modify the intensity of the emitted light energy (6) according to two different states during the periods of transmission of the said messages, and the said means (70b) sensitive to the electromagnetic radiation detect said two states so as to deliver electric signals having two different states, **characterised in that** the said encoding means (4a) generate first and second encoded digital signals having a first and a second frequency representing the first and second logic states of the said digital data, in that the modulation means (4b - 4c) modulate the emitted light intensity (6) in accordance with one or other of said frequencies in dependence on the logic state of the said digital code, and in that the said decoding means (72, 73) generate a digital signal in a first logic state when the said means sensitive to the electromagnetic radiation (70b) detect a radiation modulated according to the first frequency, and generate a digital signal in a second logic state when they detect a radiation modulated according to the second frequency.

2. A system according to claim I, **characterised in that** the said encoding means (4a) also comprise means (42) for outputting two series of digital control signals, copies of the encoded digital signals, a first series of control signals being in phase with the digital control signals, the other being in phase opposition to said signals, in that said modulation means (4b - 4c) comprise at least one four-branch bridge, comprising an electronic switch (47ₐ - 47_{d}) disposed on each branch, the switches of two opposite branches on a first diagonal of the bridge receiving the signals of a first series, the switches of two opposite branches on the other diagonal receiving the signals of the second series, in that two end points of the bridge (A-B), are connected to a specific supply voltage and the said visible light illuminating means (5) are connected to the other two end points of the bridge (C-D) in such manner that at each instant a single diagonal of the bridge is activated and transmit a supply energy to the visible illuminating means (5) in time with the variations of the said two series of control signals.

3. A system according to any one of the preceding claims, **characterised in that** the visible light illuminating means are fluorescent tubes (5) controlled by the said modulation means (4b - 4c).

4. A method of transmitting messages between a transmitter and at least one receiver (7), comprising a transmission phase comprising: i) a step comprising generating digital data representative of a message, ii) a step comprising encoding said data into a specific digital serial code and iii) a step comprising modulating an electromagnetic radiation in accordance with a specific mode; a reception phase comprising: a) a step comprising detection of the modulated electromagnetic radiation, b) a step comprising conversion of the detected electromagnetic radiation into electric signals and c) a decoding step whereby the said message can be reconstituted from the converted signals, the said modulation step (iii) comprising modulating the emitted visible light by supplying the illumination means emitting said visible light (5) by means of signals modulated in accordance with said mode, so as to modify the intensity of the emitted light according to two different states during the periods of transmission of said messages, the detection step (a) and conversion step (b) comprising generating electric signals having two states in such manner as to deliver digital electric signals having two different states in synchronism with the said modulation of the visible light, and the decoding step (c) comprising reconstituting the said digital data representative of the message from said digital signals having two states, **characterised in that** the said modulation step (iii) comprises generating a supply voltage for the said visible light illuminating means having a first or a second specific frequency in dependence on the logic state of said digital data representative of the message, so as to cause the light intensity emitted to vary between two specific states.

5. A method according to claim 4, **characterised in that** the said reconstituted data are re-transmitted to the said transmitter by radio link (77 - 78) in order to verify good reception.

6. A method according to claim 4 or 5, **characterised in that** the said message is transmitted in two sequences which are staggered in time, a first sequence carrying digital identification data and a second sequence carrying updating data, in that it comprises a step for selecting at least one receiver (7) by means of the sequence carrying identification data and a step, in each receiver (7) selected during the previous step, comprising erasure of the data carried by the sequence carrying updated digital data.

7. A method according to any one of claims 4 to 6, **characterised in that** the said digital data generated to represent the message are encoded in accordance with a serial code of the ASCII type and in that it comprises a step for transcoding into hexadecimal code which minimises the effects, visible to the human eye, of the variations in the light intensity due to said modulation.

8. Application of the system according to any one of claims 1 to 3, to updating data displayed by an electronic notice (7), said electronic notices constituting the said receivers, **characterised in that** each electronic notice comprises at least one photoelectric cell (70b) picking up and converting the said light energy into electric signals, means (72) for converting electric signals into digital signals having two different states according to the state of the said modulation of the said emitted light, means (73) for decoding said digital signals having two states, so as to reconstitute the message carried by the digital data generated in the said transmitter, information processing means (74) storing the decoded data and display means (75 - 76) for the stored data.
